# EUROPEAN PATENT SPECIFICATION

(11) **EP 1 727 775 B1**
(45) Date of publication and mention of the grant of the patent: **17.10.2007**
(21) Application number: 05726003.6
(22) Date of filing: 21.03.2005
(51) Int. Cl.: C04B 40/00, C04B 40/02

(54) **MULTIPLE MODE ACCELERATING AGENT FOR CEMENTITIOUS MATERIALS**
MULTIMODUS-BESCHLEUNIGER FÜR ZEMENTMATERIALIEN
AGENT ACCELERATEUR A MODE MULTIPLE DESTINE A DES MATERIAUX CIMENTIERS

(30) Priority: 19.03.2004 US 554802 P
(43) Date of publication of application: 06.12.2006
(73) Proprietor: James Hardie International Finance N.V., 1077 ZX Amsterdam (NL)
(72) Inventor: HOJAJI, Hamid, Claremont, California 91711 (US); KUIZENGA, Marcus, Henry, Alta Loma, California 91737 (US); NAJI, Basil, Toongabbie, New South Wales 2146 (AU)
(74) Representative: Mallalieu, Catherine Louise
(86) International application number: PCT/US2005/009409
(87) International publication number: WO 2005/092818

(56) References cited:
- WO-A-95/04010
- DE-A1- 10 026 022
- GB-A- 2 192 392
- US-A- 4 257 814
- US-A- 5 635 292
- US-A- 5 697 307
- PATENT ABSTRACTS OF JAPAN vol. 2000, no. 22, 9 March 2001 (2001-03-09) & JP 2001 130940 A (NICHIHA CORP), 15 May 2001 (2001-05-15)

## Description

### Background of the Invention

### Field of the Invention

This invention generally relates to cement setting accelerators, and particularly relates to cement setting accelerators that operate in multiple modes.

### Description of the Related Art

Fossil fuels supply over 85% of the world's energy needs and are expected to stay in use for many decades to come. Carbon dioxide (CO₂) emissions from the combustion of fossil fuels and from waste incinerators have been linked to global warming and other adverse environmental changes through the green house effect. However, CO₂ also has many useful applications, such as refrigeration, fertilizers, dry cleaning, oil well extraction and rapid curing of cementitious products. Thus, capturing and recycling gaseous CO₂ for useful applications have been gaining momentum in the past several years. Many methods have been developed to capture gaseous CO₂ especially from stationary fossil fuel burning sources such as electrical generating power plants, cement kilns, waste incinerators, and other coal and natural gas burning sources.

One of the more economical methods of capturing CO₂ is through absorption of the gas by a solvent or a slurry of CO₂ reactive minerals. Examples of materials that can be used to sequester CO₂ include primary, secondary, and tertiary alkanolamines, including monoetholamine (MEA), diethanolamine (DEA), triethanolamine (TEA), methyldiethanolamine (MDEA), diisopropanolamine (DIPA), and N,N,N,N-Tetrakis (2-hydroxyethyl)ethylenediamine(THEED), as well as primary, secondary, and tertiary alkylamines such as mono- di- and triethylamine (CH₃CH₂)₃N, all of which can reversibly react with CO₂, depending on predetermined conditions of pH and available free water.

Primary and secondary amines can react directly with CO₂ in the absence of water, forming carbamates (RNHCOO- or R₂NCOO-). CO₂ also reacts with the hydroxyl groups of the alkanolamines, probably leading to formation of an alkylcarbonic acid or alkyl carbonate as shown in the reaction: R₂NROH + CO₂ → R₂NROCOOH or R₂NROCOO-. U.S. Patent No. 5,697,307 discloses the use of either alkanolamines or alkaline salt solutions such as sodium carbonate solution to sequester CO_{2.}

It is known that under certain predetermined conditions of pressure, temperature and pH, the reaction products of alkylamines and/or alkanolamines, such as carbamates, alkylcarbonic acids and alkyl carbonates, will decompose and release CO₂ gas. It is also known that alkali metal carbonate solutions that have absorbed CO₂ can be made to release the CO₂ by changing to predetermined conditions of pressure, temperature or pH. However, the commercial reuse of CO₂ from these sources is far less than the amount of CO₂ sequestered from flue gas emissions. Thus, what is needed is a way to commercially utilize the CO₂ captured from flue gas scrubbers.

It is also known that alkanolamines can accelerate the setting of cementitious materials. U.S. Patent Application No. 20040040474 discloses adding alkanolamines such as TEA on the order of 0.03 to 4.0 wt.% to hydraulic cement, such as blends of high alumina cement and Portland cement, at an elevated temperature of at least 90°F to accelerate the set time of the cement. In this application, while alkanolamine contributes to accelerating cement set, other materials such as high alumina cement and/or fly ash are also required to achieve very rapid setting. Thus, what is needed is a way of using alkanolamines to achieve rapid setting without the need for additional mineral admixtures such as high alumina cement, gypsum, or fly ash.

CO₂ is also known in the art as an agent for accelerating curing cement composites. This is possible because of the free calcium hydroxide (Ca(OH)₂) produced from the hydration reaction of Portland cement:

2C₂S + 4H → C₃S₂H₃ + Ca(OH)₂ ;

2C₃S + 6H → C₃S₂H₃ + 3Ca(OH)₂;

in which the following notations are adopted: C=CaO; S=SiO₂ H=H₂O.

It is believed that CO₂ reacts with free calcium hydroxide to form fine crystals of calcium carbonate (CaCO₃). By consuming the Ca(OH)₂ reaction product from cement hydration, the conversion of C₂S and C₃S to C₃S₂H₃ is accelerated. It is also believed that the calcium carbonate crystals provide mechanical strength to the hydrating cement and provide nucleation sites for normal cement hydration reactions.

The reaction kinetics of alkaline earth hydroxides, such as calcium hydroxide with carbon dioxide is quite fast, often orders of magnitude faster than the reaction of CO₂ with the alkaline oxides, which can result in faster set times that are comparable to the set times when traditional cement accelerators such as calcium chloride or even alkanolamines are used. Prior art discloses several methods of treating cementitious materials with CO₂. These include:
- Forcing gaseous CO₂ under pressure through the pores of an uncured cement composite;
- Using water saturated with CO₂ to make up the cement composite;
- Using supercritical CO₂ to penetrate the cement composite.

However, use of gaseous or supercritical CO₂ requires equipment capable of administering the CO₂ under pressure without damaging the article, which could become problematic for continuous forming processes. While it is relatively easy to use CO₂ saturated water to formulate cement composite, CO₂ is not soluble enough in water to fully carbonate materials with substantial cement content. Thus, what is needed is a way to effectively, uniformly deliver a stoichiometrically correct amount of CO₂ into cement composites. The preferred embodiments of the present invention provide an economical and viable solution to at least some of the shortcomings associated with the current art of curing cement composites with carbon dioxide.

### Summary of the Invention

As used herein, the term "sequestered" shall mean substantially dissolved in, absorbed by, and/or chemically bonded to a carrier material so as to be substantially incapable of chemically reacting with other surrounding materials. The term "reversibly sequestered" shall mean capable of being removed, released or desorbed from the carrier material.

In one aspect, the preferred embodiments of the present invention provide a method of accelerating cement hydration reactions in an uncured cementitious composite material. The method includes incorporating a multiple mode accelerating agent in an uncured cementitious composition. The multiple mode accelerating agent comprises carbon dioxide sequestered in a carrier material which is also capable of accelerating cement hydration reactions. The method further includes releasing the sequestered carbon dioxide from the carrier material under one or more predetermined process conditions and reacting both the carbon dioxide and the carrier material with the uncured cementitious composition in a manner so as to accelerate the cement hydration reactions therein. Preferably, the carrier material is in a liquid form. In one embodiment, the carrier material is selected from the group consisting of alkanolamines, alkylamines, alkali carbonates, and mixtures thereof. In a preferred implementation, the multiple mode set accelerating agent speeds up the cement hydration reactions by a combination of alkali activation and carbonation. In certain embodiments, the release of the sequestered carbon dioxide from the carrier material is controlled by a process condition selected from the group consisting of temperature, pressure, pH and combinations thereof.

The multiple mode accelerating agent can be incorporated in a cementitious slurry, a cementitious paste, or a cementitious green shaped article. In one embodiment, the accelerating agent is incorporated in a pre-selected region of a green shaped article and absent in other regions of the article. The pre-selected region of the green shaped article can be selected from the group consisting of an exterior surface, a corner, an interior surface, and combinations thereof. The accelerating agent can be applied to the pre-selected region by a process selected from the group consisting of spraying, dipping, pouring, brushing, and combinations thereof. The carbon dioxide and carrier material accelerate the cement hydration reactions in the pre-selected region thereby resulting in a rapid formation of a partially cured zone in the green shaped article. In some embodiments, the stoichiometric amount of carbon dioxide sequestered in the carrier material is predetermined based on the amount of calcium hydroxide in the preselected region. In other embodiments, the method further includes autoclave curing the green shaped article following formation of the partially cured zone. In yet another embodiment, the cementitious composition is configured for the manufacture of a building article.

### Detailed Description of Preferred Embodiments

Certain preferred embodiments of the present invention describe a multiple mode cement set accelerating agent that operates through a combination of alkali activation and carbonation. In one embodiment, the cement set accelerating agent comprises gaseous carbon dioxide (CO₂) reversibly sequestered in a carrier fluid, which is also a cement set accelerator capable of accelerating the hydration reactions of the cement independent of the CO₂. In some preferred embodiments, the CO₂ reacts with the carrier fluid in a manner such that the CO₂ is reversibly dissolved and saturated in the carrier fluid and can be released under certain predetermined processing conditions. In one embodiment, the carrier fluid is an aqueous solution comprising alkanolamine and/or alkali carbonate. The CO₂ reacts with the alkanolamine and/or alkali carbonate solutions and becomes dissolved therein. Since both CO₂ and alkanolamine and/or alkali are function as cement set accelerator agents, they together form an accelerator having more than one operating mode. Preferably, the CO₂ is incorporated in the alkanolamine and/or alkali carbonate solutions using any suitable technique to dissolve a gas in a fluid. One such technique involves transferring CO₂ from waste flue gases into an alkanolamine solution by chemical absorption and other methods, such as those methods described in U.S. Patent Numbers 6,555,150 and 5,697,307.

When the multiple mode cement set accelerating agent is added to a cementitious mixture, both the carrier fluid and CO₂ dissolved therein can accelerate the cement hydration reaction under predetermined processing conditions. In certain embodiments, the multiple mode cement set accelerator can include more than two accelerator agents. In other embodiments, the carrier material is not necessarily in fluid form and can be a solid substance.

In a preferred embodiment, the multiple mode accelerating agent comprises carbon dioxide reversibly sequestered in an alkanolamine solution. The accelerating agent is added to an uncured cementitious material to affect the cement hydration process. Without wishing to be bound by theory, it is believed that the alkanolamine interacts with Portland cement to provide the aluminates and sulfate ions needed for the formation of hydrates based on calcium aluminate compounds. Additional details of the manner in which alkanolamines speed up the setting characteristics is described in U.S. Patent Application No. 20040040474. Moreover, after the accelerating agent is added to the uncured cementitious material, the CO₂ can be released from the carrier fluid under predetermined conditions as will be described in greater detail below. Preferably, the CO₂ further accelerates the cement hydration reaction by reacting with free calcium hydroxide, which is a product of the cement hydration reaction. This in turn reduces the concentration of Ca(OH)₂ and hence speeds up the cement hydration reaction.

As described above, the preferred embodiments of the present invention provide a method of rapidly setting cementitious materials through a combination of alkali activation and carbonation. Preferably, this is done by treating a cementitious material, based on ingredients such as Portland cement, with a CO₂ liquid sequestering fluid that has reversibly sequestered a substantial amount of CO₂. Preferably, the CO₂ is sequestered in an alkanolamine, alkylamine or alkali carbonate sequestering solutions prepared using known methods and techniques. When applied to the cementitious material, CO₂ is desorbed from the sequestering fluid to react with hydrated lime (Ca(OH)₂) and form calcium carbonate, and thus substantially reduce the set time.

In one embodiment, the source of calcium hydroxide or hydrated lime can be from process water, a byproduct of cement hydration, or added in dry form as a supplement to the existing formulation. Preferably, a fluid material is provided that can be made to reversibly sequester a predetermined amount of carbon dioxide and release it under predetermined conditions in the presence of a cementitious material in order to accelerate the hardening or curing of that material. Preferably, a liquid sequestering fluid, such as an alkanolamine, is used that also acts independently as an accelerator for cement cure.

In another embodiment, a liquid sequestering fluid is selected that can scrub CO₂ from flue gases produced by combustion of fossil fuels, that otherwise can contribute to green house effects as described in U.S. Patent No. 6,655,150. As such, an economically feasible method of reducing the setting time of commercially produced products containing Portland cement or similar cementitious materials is provided.

Certain embodiments of the present invention further provide a material that can be made to reversibly sequester a predetermined amount of carbon dioxide (CO₂) and release the CO₂ under predetermined conditions in the presence of a cementitious material so as to accelerate the setting or curing of the cementitious material. In one embodiment, the material comprises an alkanolamine, alkylamine, or alkali carbonate sequestering solutions for CO₂. Mono-, di-, and tri- ethanolamines are preferred sequester liquids in some embodiments. In other embodiments, MEA is a more preferred sequestering agent because of its large affinity for CO₂, low cost and being substantially non-toxic. MEA has been widely used as a rapid setting admixture in concrete industry. Based on the choice of sequestering solutions, the condition for releasing CO₂ from the sequestering solution into the uncured cement composite may be determined, or conversely, the manufacturing constraints of a cement composite manufacturing process may be used to determine the type and quantity of sequestering agent to be used.

One of the factors in determining the utility of the above described materials and methods to a specific manufacturing process is the amount of free Ca(OH)₂ available for carbonation. Calcium hydroxide is readily available in the water phase of freshly mixed concrete, the makeup of water of extrudable cementitious pastes or the process water of a dewatering process such as Hatschek, Mazza, Fourdrinier or Magnani processes. For example, in a typical Hatschek process, calcium ion content contributed from Ca(OH)₂ is on the order of about 1000 to 2000 ppm. This value can of course fluctuate depending on the cement to water ratio of the process, the grain size of the cement, the mixing time and temperature and the effects of other additives. In certain preferred embodiments, the amount of available Ca(OH)₂ at a given stage in a given manufacturing process may be determined by sampling the process directly or by modeling the system. After determining the amount of available Ca(OH)₂, the next step in some embodiments is to analytically determine how much of the available lime must be carbonated to achieve the desired amount of rapid cure in the manufactured cement composite, which can be done by routine experimentation.

The CO₂-containing sequestering fluid may be applied to uncured cement composite in a number of ways known in the art. For example, a solution of an alkanolamine sequestering fluid, such as triethanolamine (TEA) sequestering fluid, containing between about 1% to 25% by weight CO₂ and more preferably between about 5% and 15% by weight CO₂ may be applied to a green fibercement sheet as formed on a Hatschek line using conventional methods and equipment such as spraying the TEA solution onto the surface of the green fibercement sheet while, in some embodiments, optionally simultaneously pulling a vacuum to the underside of the sheet, as is common on many Hatschek, Fourdrinier or Mazza style fibercement processes. In this embodiment, the CO₂ bearing TEA solution may be applied to as a super-cooled solution below its normal freezing point of 21°C and applied to a relatively warm fibercement sheet with a temperature of 25°C or more. Upon contact with the fibercement sheet, the TEA solution will warm and liberate gaseous CO₂ in proportion to the degree of warming. The liberated CO₂ will react with any free Ca(OH)₂ present in the fibercement sheet, forming calcium carbonate and stiffening the fibercement sheet. Alternately, the fibercement sheet may be warmed by external means, such as exposure to an infrared lamp or microwave source. Additionally, since normal hydration of the cementitous materials is exothermic, it is expected that CO₂ would be liberated as normal hydration proceeds and heats the article, In with case, the additional CO₂ liberated would advance the cure of the article. After the sequestering fluid is collected by, for example, a vacuum system after releasing its CO₂, the spent sequestering fluid may be recovered and recharged with CO₂, such as being reused as part of a CO₂ capture system for flue gases.

In one embodiment, the TEA solution may be added directly to the fibercement slurry mixing vessel to carbonate as much of the free Ca(OH)₂ as desired. The TEA may be difficult to recover and reuse as it is fully miscible with water. In other embodiments involving fibercement pastes prepared for extrusion or injection molding, for example, the CO₂ sequestering solution could be an alkanolamine or an alkali carbonate solution. This solution may be added directly into the mixing vessel, such as a twin screw extruder, Buss kneader or any other known high shear mixture or pan mixer such as an Eirich mixer. Preferably, the solution is added as late as possible in the mixing regime to avoid premature set and damage to the mixing equipment.

Preferably, shortly after the sequestering solution is added, the cement paste is extruded or molded into its final shape and subjected to heat, reduced pressure, a chemical means or a combination of these methods to release the sequestered CO₂. Alternatively, sequestering liquid containing CO₂ is preferably applied post formation of the green bodies to rapidly form a hard skin, thus imparting early strength and handability to the cementitious product. The liquid can be applied by spraying, dipping, pouring, brushing, etc. to the interior and exterior of the green product.

In certain embodiments, the CO₂ sequestering fluid may be applied to a specific region of the cementitious material in order to accelerate cure in that region. This technique can be used to carbonate the unsupported regions of shaped fibercement materials in the green state to help hold their shape prior to curing by some other curing regime, such as autoclaving. The technique may also be used to quickly provide a partially cured zone within a green fibercement article that may be easily cut, scored, and snapped or broken into smaller individual pieces that are cured by some other method. In one embodiment, the CO₂ sequestering fluid is applied to exterior surfaces of the green article so as to form a partially cured skin on the article to provide support prior to autoclave curing. In another embodiment, the CO₂ sequestering fluid is applied to the corners of the green article so as to form partially cured corners to facilitate handling of the green article. In yet another embodiment, the CO₂ sequestering fluid can be applied to an interior region of the green article to form a partially cured interior zone. In yet another embodiment, the CO₂ sequestering fluid was applied to inside of a pipe to provide structural support for the green shaped pipe while curing.

### Example 1

Spray treatment of Hatschek processed fibercement sheets

A 10 kg (dry basis) portion of a continuous sheet of green, uncured fibercement of standard composition known in the art is formed on a Hatschek forming machine. The composition includes Portland cement, silica, cellulose fibers, and water. This 10 kg portion contains approximately 3 kg of water. This capillary water contains about 2000 ppm of calcium ions, which corresponds to approximately 0.012 kg of Ca(OH)₂. In one embodiment, fully carbonating the available Ca(OH)₂ in the water requires about 0.0071 kg of CO₂. Assuming the spray/vacuum system described below achieves a reaction efficiency of about 80% then requires about 0.009 kg CO₂. This amount of CO₂ is provided using 0.09 kg of triethanolamine. (TEA) solution saturated with about 10% CO₂ by weight. This equates to an about 3% solution of TEA based on dry cement content of the fibercement. The entire fibercement sheet is cut to size, stacked and allowed to set further via the alkaline activation of unreacted silicates by TEA until a predetermined degree of cure was obtained.

### Example 2

To make an extrudable paste, about 10 kg (dry weight) sample of fibercement paste may be prepared in a Hobart mixer using:
- about 3 kg Portland cement having a C3S content of about 60%;
- about 0.9 kg cellulose fibers refined to about 400-450 ml csf freeness;
- about 2.5 kg ground silica sand (about 340-360 m²/kg);
- about 3.0 kg synthetic calcium silicate hydrate, preferably as described in Example 1 of patent application WO 98/45222.
- about 1.0 kg hydroxyethylmethylcellulose;
- about 2 kg water.

The paste is mixed until it is of uniform consistency and a stoichiometric amount of TEA about 5% saturated with CO₂ is added to react with about 50% of the calculated Ca(OH)₂ content. The paste is immediately extruded into a plank of rectangular cross section, trimmed into discrete lengths, preferably using a water jet cutting apparatus, and allowed to set to a predetermined level of cure. The now fully handle-able plank is transported to a steam autoclave and cured at about 180°C for about 8 hours.

## Claims

1. A method of accelerating cement hydration reactions in an uncured cementitious composite material, comprising:
incorporating a multiple mode cement set accelerating agent in an uncured cementitious composition, wherein said accelerating agent comprises carbon dioxide reversibly sequestered in a carrier material, wherein the carrier material is capable of accelerating cement hydration reactions;
releasing the sequestered carbon dioxide from the carrier material; and
reacting both the carbon dioxide and carrier material with the uncured cementitious composition thereby accelerating the cement hydration reactions therein.

2. The method of Claim 1, wherein the uncured cementitious composition comprises a hydraulic binder, aggregates, and water.

3. The method of Claim 1, wherein the multiple mode cement set accelerating agent speeds up the cement hydration reactions by a combination of alkali activation and carbonation.

4. The method of Claim 1, wherein the carrier material is in a liquid form.

5. The method of Claim 4, wherein the carrier material is selected from the group consisting of alkanolamines, alkylamines, alkali carbonates, and mixtures thereof.

6. The method of Claim 1, wherein the accelerating agent is incorporated in a cementitious slurry.

7. The method of Claim 1, wherein the accelerating agent is incorporated in a cementitious paste.

8. The method of Claim 1, wherein the accelerating agent is incorporated in a cementitious green shaped article.

9. The method of Claim 8, wherein the accelerating agent is incorporated in a pre-selected region of the green shaped article, wherein the accelerating agent is absent in other regions of the green shaped article.

10. The method of Claim 9, wherein the pre-selected region of the green shaped article is selected from the group consisting of an exterior surface, a corner, an interior surface, and combinations thereof.

11. The method of Claim 9, wherein the accelerating agent is incorporated in the pre-selected region of the green shaped article by a process selected from the group consisting of spraying, dipping, pouring, brushing, and combinations thereof.

12. The method of Claim 9, wherein the carbon dioxide and carrier material accelerate the cement hydration reactions in the pre-selected region thereby resulting in a rapid formation of a partially cured zone in the green shaped article.

13. The method of Claim 9, further comprising autoclave curing the green shaped article following formation of the partially cured zone.

14. The method of Claim 9, wherein the stoichiometric amount of carbon dioxide sequestered in the carrier material is predetermined based on the amount of calcium hydroxide in the pre-selected region.

15. The method of Claim 1, wherein the release of the sequestered carbon dioxide from the carrier material is controlled by a process condition selected from the group consisting of temperature, pressure, pH and combinations thereof.

16. The method of Claim 1, wherein the uncured cementitous composition is configured for the manufacture of a building article.

17. A building article made in accordance with any one of the methods claimed above.

## Patentansprüche

1. Verfahren zum Beschleunigen von Zementhydratisierungsreaktionen in einem ungehärteten zementartigen Verbundmaterial, wobei das Verfahren folgendes umfaßt:
Aufnehmen eines das Binden von Zement auf mehrere Arten beschleunigenden Mittels in eine ungehärtete zementartige Zusammensetzung, wobei das Beschleunigungsmittel Kohlendioxid umfaßt, welches in einem Trägermaterial reversibel sequestriert ist, wobei das Trägermaterial Zementhydratisierungsreaktionen beschleunigen kann,
Freisetzen des sequestrierten Kohlendioxids aus dem Trägermaterial und
Umsetzen sowohl des Kohlendioxids als auch des Trägermaterials mit der ungehärteten zementartigen Zusammensetzung unter Beschleunigung der darin ablaufenden Zementhydratisierungsreaktionen.

2. Verfahren nach Anspruch 1, wobei die ungehärtete zementartige Zusammensetzung ein hydraulisches Bindemittel, Aggregate und Wasser umfaßt.

3. Verfahren nach Anspruch 1, wobei das das Binden von Zement auf mehrere Arten beschleunigende Mittel die Zementhydratisierungsreaktionen durch eine Kombination aus Alkaliaktivierung und Karbonisierung beschleunigt.

4. Verfahren nach Anspruch 1, wobei das Trägermaterial in flüssiger Form vorliegt.

5. Verfahren nach Anspruch 4, wobei das Trägermaterial aus der Gruppe ausgewählt ist, bestehend aus Alkanolaminen, Alkylaminen, Alkalicarbonaten und Gemischen davon.

6. Verfahren nach Anspruch 1, wobei das Beschleunigungsmittel in eine zementartige Aufschlämmung aufgenommen wird.

7. Verfahren nach Anspruch 1, wobei das Beschleunigungsmittel in eine zementartige Paste aufgenommen wird.

8. Verfahren nach Anspruch 1, wobei das Beschleunigungsmittel in einen zementartigen ungehärteten Formgegenstand aufgenommen wird.

9. Verfahren nach Anspruch 8, wobei das Beschleunigungsmittel in einem zuvor ausgewählten Bereich des ungehärteten Formgegenstands aufgenommen wird, wobei das Beschleunigungsmittel in anderen Bereichen des ungehärteten Formgegenstands nicht vorhanden ist.

10. Verfahren nach Anspruch 9, wobei der zuvor ausgewählte Bereich des ungehärteten Formgegenstands aus der Gruppe ausgewählt ist, bestehend aus einer äußeren Oberfläche, einer Ecke, einer inneren Oberfläche und Kombinationen davon.

11. Verfahren nach Anspruch 9, wobei das Beschleunigungsmittel durch ein Verfahren, ausgewählt aus der Gruppe, bestehend aus Sprühen, Eintauchen, Gießen, Bürsten und Kombinationen davon, in den zuvor ausgewählten Bereich des ungehärteten Formgegenstands aufgenommen wird.

12. Verfahren nach Anspruch 9, wobei das Kohlendioxid und das Trägermaterial die Zementhydratisierungsreaktionen in dem zuvor ausgewählten Bereich beschleunigen, was zu einer raschen Bildung einer teilweise gehärteten Zone in dem ungehärteten Formgegenstand führt.

13. Verfahren nach Anspruch 9, welches weiterhin das Härten des ungehärteten Formgegenstands im Autoklaven nach Bildung der teilweise gehärteten Zone umfaßt.

14. Verfahren nach Anspruch 9, wobei die stöchiometrische Menge an Kohlendioxid, das in dem Trägermaterial sequestriert ist, basierend auf der Menge an Calciumhydroxid in dem zuvor ausgewählten Bereich vorbestimmt wird.

15. Verfahren nach Anspruch 1, wobei die Freisetzung des sequestrierten Kohlendioxids aus dem Trägermaterial durch eine Verfahrensbedingung, ausgewählt aus der Gruppe, bestehend aus Temperatur, Druck, pH-Wert und Kombinationen davon, kontrolliert wird.

16. Verfahren nach Anspruch 1, wobei die ungehärtete zementartige Zusammensetzung für die Herstellung eines Baugegenstands ausgestaltet ist.

17. Baugegenstand, hergestellt gemäß einem der oben beanspruchten Verfahren.

## Revendications

1. Procédé pour accélérer les réactions d'hydratation du ciment dans un matériau composite à base de ciment non durci, comprenant :
l'incorporation d'un agent d'accélération de prise du ciment à modes multiples à une composition à base de ciment non durcie, ledit agent d'accélération comprenant du dioxyde de carbone séquestré de manière réversible dans une matière de support, la matière de support étant capable d'accélérer les réactions d'hydratation du ciment ;
la libération du dioxyde de carbone séquestré de la matière de support ; et
la réaction à la fois du dioxyde de carbone et de la matière de support avec la composition à base de ciment non durcie, ce qui accélère les réactions d'hydratation du ciment dans cette composition.

2. Procédé suivant la revendication 1, dans lequel la composition à base de ciment non durcie comprend un liant hydraulique, des agrégats et de l'eau.

3. Procédé suivant la revendication 1, dans lequel l'agent d'accélération de prise du ciment à modes multiples accélère les réactions d'hydratation du ciment par une association d'activation alcaline et de carbonatation.

4. Procédé suivant la revendication 1, dans lequel la matière de support est sous forme liquide.

5. Procédé suivant la revendication 4, dans lequel la matière de support est choisie dans le groupe consistant en des alcanolamines, des alkylamines, des carbonates de métaux alcalins et leurs mélanges.

6. Procédé suivant la revendication 1, dans lequel l'agent d'accélération est incorporé à une suspension à base de ciment.

7. Procédé suivant la revendication 1, dans lequel l'agent d'accélération est incorporé à une pâte à base de ciment.

8. Procédé suivant la revendication 1, dans lequel l'agent d'accélération est incorporé à un article façonné cru à base de ciment.

9. Procédé suivant la revendication 8, dans lequel l'agent d'accélération est incorporé à une région choisie préalablement de l'article façonné cru, l'agent d'accélération étant absent dans les autres régions de l'articule façonné cru.

10. Procédé suivant la revendication 9, dans lequel la région choisie préalablement de l'article façonné cru est choisie dans le groupe consistant en une surface extérieure, un angle, une surface intérieure et leurs associations.

11. Procédé suivant la revendication 9, dans lequel l'agent d'accélération est incorporé à la région choisie préalablement de l'article façonné cru par un mode opératoire choisi dans le groupe consistant en la pulvérisation, le trempage, la coulée, l'application à la brosse et leurs associations.

12. Procédé suivant la revendication 9, dans lequel le dioxyde de carbone et la matière de support accélèrent les réactions d'hydratation du ciment dans la région choisie préalablement, entraînant ainsi une formation rapide d'une zone partiellement durcie dans l'article façonné cru.

13. Procédé suivant la revendication 9, comprenant en outre le durcissement en autoclave de l'article façonné cru après formation de la zone partiellement durcie.

14. Procédé suivant la revendication 9, dans lequel la quantité stoechiométrique de dioxyde de carbone séquestré dans la matière de support est prédéterminée sur la base de la quantité d'hydroxyde de calcium dans la région choisie préalablement.

15. Procédé suivant la revendication 1, dans lequel la libération du dioxyde de carbone séquestré de la matière de support est régulée par une condition de procédé choisie dans le groupe consistant en la température, la pression, le pH et leurs associations.

16. Procédé suivant la revendication 1, dans lequel la composition à base de ciment non durcie est configurée pour la production d'un article de construction.

17. Article de construction produit suivant l'un quelconque des procédés revendiqués ci-dessus.
